# EUROPEAN PATENT APPLICATION

(11) **EP 4 668 435 A1**
(43) Date of publication of application: **24.12.2025**
(21) Application number: 25181013.1
(22) Date of filing: 05.06.2025
(51) Int. Cl.: H01M 50/209, H01M 50/238, H01M 50/242, H01M 50/267, H01M 50/271, H01M 50/287, H01M 50/291, H01M 50/296, H01M 50/502, H01M 50/507

(54) **BATTERY MODULE AND BATTERY PACK**

(30) Priority: 17.06.2024 CN 202421380493 U
(71) Applicant: AESC Japan Ltd., Yokohama-Shi, Kanagawa 220-0012 (JP)
(72) Inventor: MENG, Ziwei, Pudong New Area Shanghai, 201315 (CN); LI, Dengke, Pudong New Area Shanghai, 201315 (CN); HE, Yafei, Pudong New Area Shanghai, 201315 (CN)
(74) Representative: Becker, Eberhard

(57) **Abstract**

Provided are a battery module and a battery pack. The battery module includes an end panel assembly (100), including an end panel body (110) and a floating connection assembly (800) slidably connected to the end panel body (110); an electrical structure (700), wherein a part of the electrical structure (700) is connected to a first area (111a) of a first panel (111) while the other part of the electrical structure (700) is connected to a second area (111b) of the first panel (111); and a cell (510), disposed on one side close to the second panel (112). The electrical structure (700) as a whole moves with the first area (111a) away from the cell (510) relative to the second area (111b), and the floating connection assembly (800) moves away from the cell (510) relative to the end panel body (110) when the cell (510) is in an expanded status.

## Description

### BACKGROUND

### Technical Field

The present disclosure relates to power battery technology, particularly to a battery module and a battery pack.

### Description of Related Art

Battery modules typically include a peripheral frame formed by existing end panels and existing side walls, as well as multiple cells mounted within the peripheral frame. In order to achieve control of the cells, control devices are also fixedly connected to the outer panel surface of the existing end panels. During the process of cyclic expansion of the cells, the existing end panels exhibit bending deformation, and the control devices fixedly connected to the existing end panels consequently bend as well, thereby resulting in damage to the circuit boards within the control devices.

### SUMMARY

In view of foregoing, the purpose of the present disclosure is to provide a battery module and a battery pack.

Based on the above purpose, the first aspect of the present disclosure provides a battery module, including: an end panel assembly, including an end panel body and a floating connection assembly, the end panel body includes a first panel and a second panel opposite to each other, the floating connection assembly is slidably connected to the end panel body; an electrical structure, a part of the electrical structure is connected to the first area of the first panel, and the part of the electrical structure is connected to the second area of the first panel through the floating connection assembly; a cell, disposed on a side close to the second panel, the cell has an expanded status, when the cell is in the expanded status, the first area of the end panel body moves in a direction away from the cell relative to the second area, the floating connection assembly moves in a direction away from the cell relative to the end panel body, so that the electrical structure as a whole moves with the first area of the end panel body.

Optionally, the end panel body is provided with a floating space along a first direction; the first direction is parallel to a thickness direction of the end panel body; the floating connection assembly is at least partially disposed in the floating space, so that the floating connection assembly may move along the first direction.

Optionally, the first panel is provided with a floating opening, the floating opening communicates with the floating space, the floating connection assembly may pass through the floating opening along the first direction.

Optionally, at least one of the inner wall of the floating space and the floating connection assembly is provided with a position-limiting structure for limiting the floating connection assembly from passing through the second panel.

Optionally, the floating connection assembly includes a floating base located in the floating space, and a shape of the cross section in the radial direction of the floating base matches a shape of the cross section in the radial direction of the floating space cross section in the radial direction cross section in the radial direction. The inner wall of the floating space along a second direction is provided with a position-limiting groove, and the groove wall of the position-limiting groove close to the second panel is defined as a first groove wall. The floating base is connected with an elastic claw that may stretch and shrink along the second direction. The floating connection assembly has a stopping state that prevents movement toward the second panel, when the floating connection assembly is in the stopping state, the elastic claw abuts against the first groove wall.

Optionally, the elastic claw includes a claw body, and a position-limiting portion formed on the claw body and protruding outward. When the elastic claw stretches, the position-limiting portion is located in the position-limiting groove. One end of the position-limiting portion close to the second panel is provided with a first abutting surface that may abut against the first groove wall.

Optionally, the free end of the claw body faces the first panel or faces the second panel.

Optionally, the second panel is provided with a mounting opening communicating with the floating space, and the floating connection assembly is inserted into the floating space through the mounting opening. The position-limiting portion is provided with an inclined surface at least at one end away from the first abutting surface.

Optionally, the floating base is fixedly connected with a fastener on one side away from the cell, and the electrical structure is connected to the floating base through the fastener.

Optionally, the end panel assembly further includes a first connector, the electrical structure is fixedly connected to the first area through the first connector.

Optionally, the median line of the first connector along the height direction of the cell coincides with the median line of the floating connection assembly along the height direction of the cell.

Based on the same inventive concept, the second aspect of the present disclosure further provides a battery pack, including the battery module as described in the first aspect and a lower housing. The bottom wall of the end panel body is fixedly connected to the lower housing, along the height direction of the end panel body, the second area is located between the first area and the bottom wall.

Optionally, the bottom wall is adhesively fixed to the lower housing.

As can be seen from the above, in the battery module and battery pack provided by the present disclosure, a part of the electrical structure is connected to the first area of the first panel, and the other part is connected to the second area of the first panel through the floating connection assembly. When the cell located on one side of the end panel body close to the second panel is in an expanded status, the first area of the end panel body moves in a direction away from the cell relative to the second area. At this time, the floating connection assembly slidably connected to the end panel body also moves in a direction away from the cell, so as to reduce the constraint of the second area of the end panel body on the electrical structure, enabling the electrical structure as a whole to move with the first area, thus maintaining a relatively straight status, which helps to overcome the problem of damage to the electrical structure due to bending with the end panel body, thereby ensuring the safety performance of the battery module.

### BRIEF DESCRIPTION OF THE DRAWINGS

In order to more clearly explain the technical solutions in the present disclosure or related technologies, the drawings required in the description of the embodiments or related technologies will be briefly introduced below. Clearly, the drawings described below are merely embodiments of the present disclosure. For those skilled in the art, other drawings may be obtained based on these drawings without creative labor.
FIG. 1 is a side view of a control device bending and deforming with an existing end panel in the related technology.
FIG. 2 is a perspective view of a battery module according to an embodiment of the present disclosure.
FIG. 3 is an exploded view of a battery module according to an embodiment of the present disclosure.
FIG. 4 is a schematic view of a first panel of a battery module according to an embodiment of the present disclosure.
FIG. 5 is a side view of a cell in an expanded status according to an embodiment of the present disclosure.
FIG. 6 is a partial sectional view of the A-A section in FIG. 4.
FIG. 7 is a partial sectional view of the A-A section after the floating connection assembly moves.
FIG. 8 is a schematic view of a second panel of a battery module according to an embodiment of the present disclosure.
FIG. 9 is a front perspective view of a floating connection assembly of a first structure of a battery module according to an embodiment of the present disclosure.
FIG. 10 is a rear perspective view of a floating connection assembly of a first structure of a battery module according to an embodiment of the present disclosure.
FIG. 11 is a partial sectional view of a floating connection assembly of a second structure of a battery module at the A-A section according to an embodiment of the present disclosure.
FIG. 12 is a front perspective view of a floating connection assembly of a second structure of a battery module according to an embodiment of the present disclosure.
FIG. 13 is a rear perspective view of a floating connection assembly of a second structure of a battery module according to an embodiment of the present disclosure.
FIG. 14 is a partial sectional view of a floating connection assembly of a third structure of a battery module at the A-A section according to an embodiment of the present disclosure.
FIG. 15 is a front perspective view of a floating connection assembly of a third structure of a battery module according to an embodiment of the present disclosure.
FIG. 16 is a rear perspective view of a floating connection assembly of a third structure of a battery module according to an embodiment of the present disclosure.

### DESCRIPTION OF THE EMBODIMENTS

In order to make the purpose, technical solution and advantages of the present disclosure more comprehensible, the following will further elaborate on the present disclosure in combination with specific examples and with reference to the accompanying drawings.

It should be noted that: unless otherwise specifically stated, the relative arrangement of assemblies, numerical expressions and values set forth in these examples do not limit the scope of the present disclosure.

At the same time, it should be understood that, for ease of description, the dimensions of the various parts shown in the drawings are not drawn according to the actual proportional relationships.

The following description of at least one exemplary example is actually only illustrative and is not intended as any limitation on the present disclosure and its applications or uses.

It should be noted that, unless otherwise defined, the technical or scientific terms used in the examples of the present disclosure should be understood in the ordinary sense by persons with general skills in the field to which the present disclosure pertains. The words "first", "second" and similar words used in the examples of the present disclosure do not indicate any sequence, quantity or importance, but are only used to distinguish different assemblies. Words such as "include" or "contain" mean that the elements or objects appearing before the word encompass the elements or objects listed after the word and their equivalents, without excluding other elements or objects. Words such as "connect" or "interconnect" are not limited to physical or mechanical connections, but may include electrical connections, whether direct or indirect. "Up", "down", "left", "right", etc. are only used to indicate relative positional relationships, and when the absolute position of the described object changes, the relative positional relationship may also change accordingly.

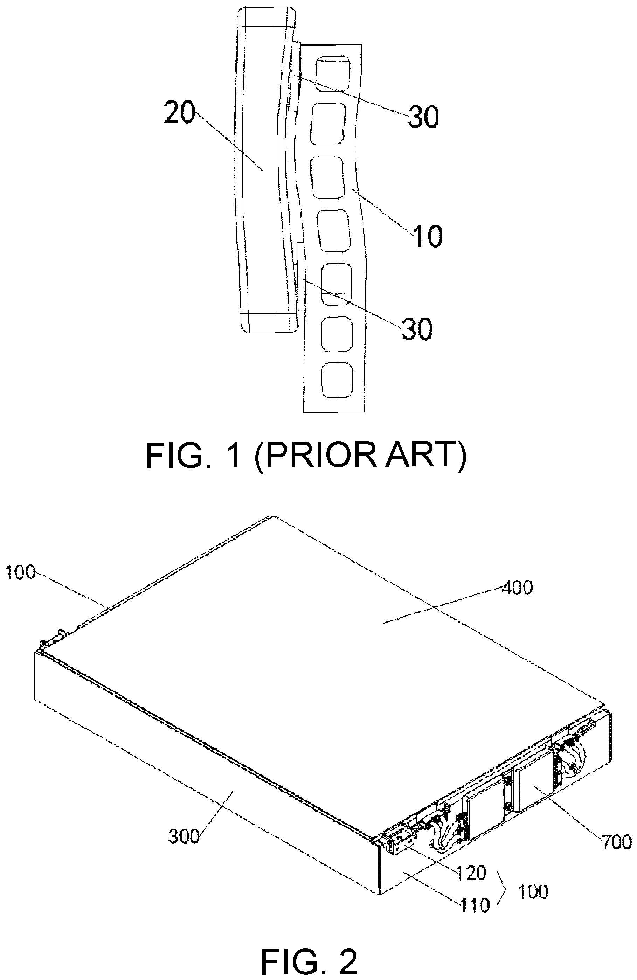

As shown in FIG. 1, FIG. 1 displays a schematic view of a control device 20 bending with an existing end panel 10 in the related technology. The control device 20 is connected to the outer panel of the existing end panel 10.

Exemplarily, the control device 20 may be a slave board, and the slave board is connected with a Cells Contact System (CCS).

Typically, the control device 20 is fixedly connected through a bolt and an existing nut 30 embedded on the existing end panel 10. During the cyclic expansion process of the existing cells (not shown in the figure) inside the existing end panel 10, the existing end panel 10 will deform under pressure. The existing nut 30 on the existing end panel 10 generates a large force on the control device 20 through the bolt, causing the control device 20 to bend and deform with the deformation of the existing end panel 10, as shown in FIG. 1, which further leads to bending damage of the printed circuit board (PCB) inside the control device 20.

To solve the above problems, an embodiment of the present disclosure provides a battery module. As shown in FIG. 2, FIG. 2 displays a three-dimensional view of the battery module. The battery module includes two end panel assemblies 100 and two side panels 300, the two side panels 300 and the two end panel assemblies 100 are encircled to form a peripheral frame of the battery module, and a module upper cover 400 is also disposed on the top of the peripheral frame.

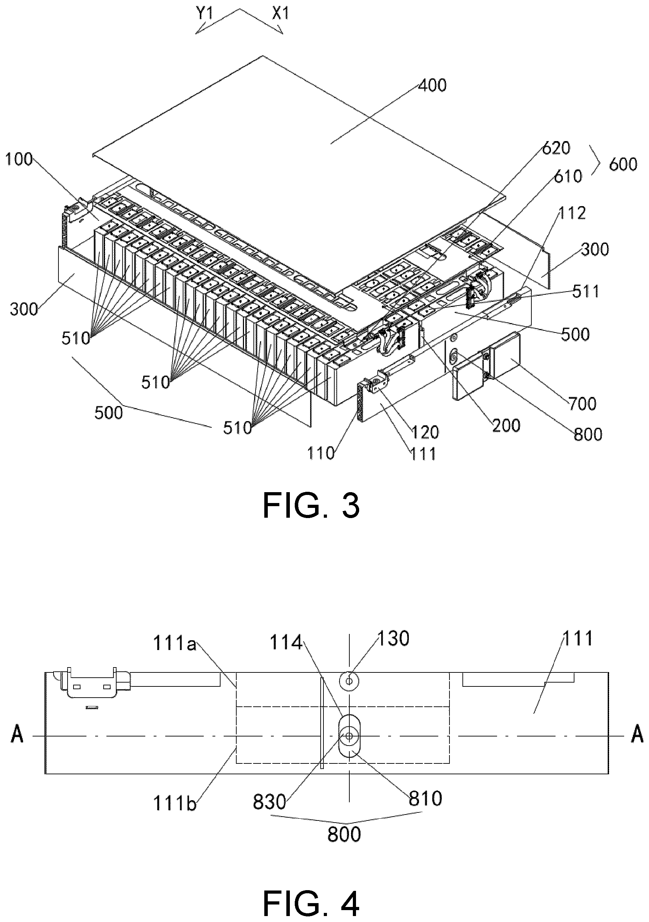

As shown in FIG. 3, FIG. 3 displays an exploded view of the battery module. A middle panel 200 is disposed inside the peripheral frame, and the middle panel 200 may be parallel to the side panel 300. Two cell groups 500 are also disposed inside the peripheral frame, with the cell groups 500 located between the middle panel 200 and the side panel 300. Each cell group 500 includes multiple cells 510 arranged along the length direction of the battery module (such as the X1 direction in FIG. 3). A bus assembly 600 is disposed above the cell groups 500, and the bus assembly 600 includes multiple module bus bars 610, with each module bus bar 610 connected to the respective electrode columns 511 of two adjacent cells 510, so as to realize electrical connection between the two adjacent cells 510. The bus assembly 600 further includes electrode output terminals 620 (including positive and negative output terminals) extending beyond the peripheral frame, and a part of the electrode output terminals 620 inside the peripheral frame is connected to the electrode column 511 of the corresponding cell 510. The end panel assembly 100 includes an end panel body 110 and an output electrode base 120 connected to the top of the end panel body 110, and the output electrode base 120 serves to support the electrode output terminals 620. Typically, the output electrode base 120 is made of an insulating material (such as plastic).

As shown in FIG. 3, the end panel body 110 includes a first panel 111 and a second panel 112 opposite to each other, with the cell 510 disposed on one side close to the second panel 112. The battery module also includes an electrical structure 700 connected to the first panel 111, exemplarily, the electrical structure 700 may be a slave board. A floating connection assembly 800 is slidably connected to the end panel body 110, and the electrical structure 700 may be connected to the first panel 111 through the floating connection assembly 800.

Specifically, as shown in FIG. 4, FIG. 4 displays a schematic view of the first panel 111 of the end panel body 110. A part of the electrical structure 700 is connected to the first area 111a of the first panel 111, and the part of the electrical structure 700 is connected to the second area 111b of the first panel 111 through the floating connection assembly 800.

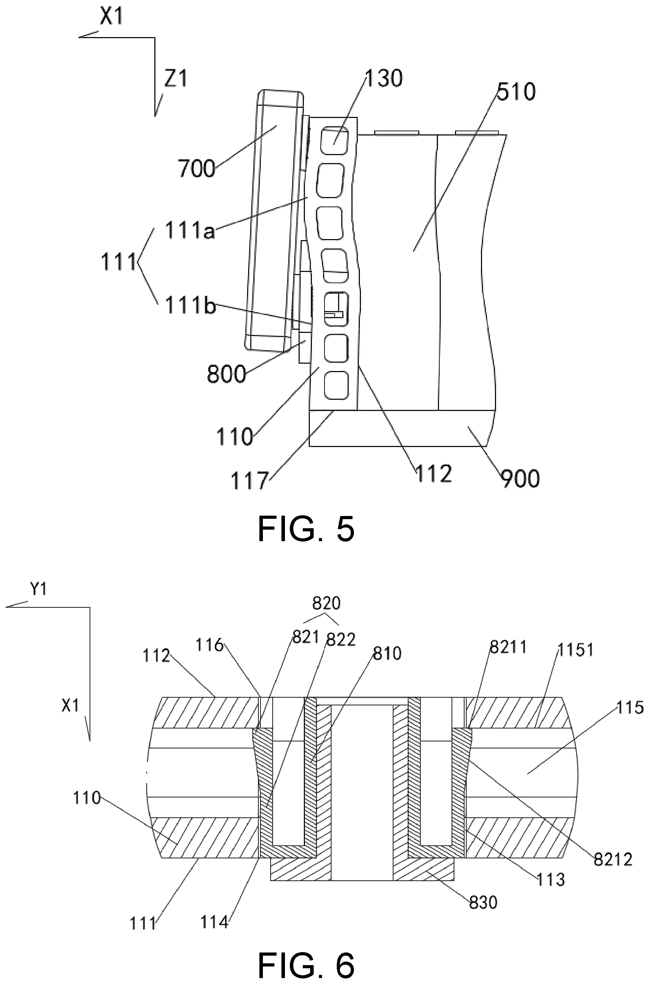

The cell 510 has an expanded status, as shown in FIG. 5, FIG. 5 displays a side view of the cell 510 in the expanded status. Under the circumstances, the first area 111a of the end panel body 110 moves in a direction away from the cell 510 relative to the second area 111b, and the floating connection assembly 800 moves in a direction away from the cell 510 relative to the end panel body 110, so that the entire electrical structure 700 moves with the first area 111a of the end panel body 110.

The structure and direction in FIG. 5 are used as an example to further explain the movement of the floating connection assembly 800. The upper part of the electrical structure 700 is connected to the first area 111a, while the lower part of the electrical structure 700 is connected to the second area 111b through the floating connection assembly 800. When the cell 510 is in the expanded status, the end panel body 110 deforms under the compression of the cell 510, and the upper part of the electrical structure 700 moves in a direction away from the cell 510 driven by the first area 111a. Since the floating connection assembly 800 is slidably connected to the end panel body 110, the floating connection assembly 800 may move with the electrical structure 700 in a direction away from the cell 510. Under the circumstances, the lower part of the electrical structure 700 separates from the first panel 111 and moves with the upper part of the electrical structure 700, that is, the entire electrical structure 700 moves with the first area 111a of the end panel body 110.

In the battery module provided by an embodiment of the present disclosure, a part of the electrical structure 700 is connected to the first area 111a of the first panel 111, and the other part is connected to the second area 111b of the first panel 111 through the floating connection assembly 800. When the cell 510 disposed on one side of the end panel body 110 close to the second panel 112 is in the expanded status, the first area 111a of the end panel body 110 moves in a direction away from the cell 510 relative to the second area 111b. Under the circumstances, the floating connection assembly 800 that is slidably connected to the end panel body 110 also moves in a direction away from the cell 510, so as to reduce the constraint of the second area 111b of the end panel body 110 on the electrical structure 700, enabling the entire electrical structure 700 to move with the first area 111a, maintaining a relatively straight status, which helps to overcome the problem of damage to the electrical structure 700 due to bending with the end panel body 110, thereby ensuring the safety performance of the battery module.

For the connection method between the floating connection assembly 800 and the end panel body 110, in some embodiments, as shown in FIG. 6, FIG. 6 displays a partial sectional view of the A-A section in FIG. 4. The end panel body 110 has a floating space 113 disposed along a first direction (such as the X1 direction in FIG. 6). The first direction is parallel to the thickness direction of the end panel body 110. The floating connection assembly 800 is at least partially disposed in the floating space 113, so that the floating connection assembly 800 may move along the first direction.

Exemplarily, the floating space 113 may be located inside the end panel body 110; or, the floating space 113 may pass through one side panel (the first panel 111 or the second panel 112) of the end panel body 110 along the first direction to; or, the floating space 113 may pass through both side panels of the end panel body 110 along the first direction.

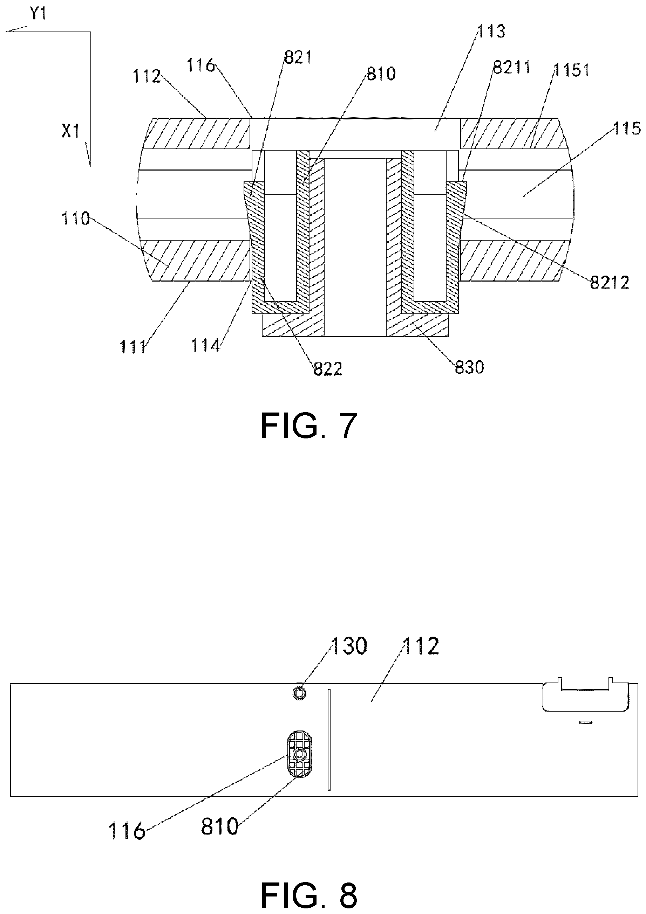

FIG. 6 displays the case where the cell 510 is in an unexpanded status, at this time the end panel body 110 is not deformed, and the floating connection assembly 800 does not move. As shown in FIG. 7, FIG. 7 displays the case where the cell 510 is in an expanded status, at this time the end panel body 110 is deformed, and the floating connection assembly 800 moves along the first direction. Compared with FIG. 6, it can be seen that when the end panel body 110 is deformed, the floating space 113 may provide moving space for the floating connection assembly 800, so that the floating connection assembly 800 may move along the first direction relative to the end panel body 110.

As shown in FIG. 6, in some embodiments, the first panel 111 is provided with a floating opening 114. The floating opening 114 is connected to the floating space 113, and the floating connection assembly 800 may pass through the floating opening 114 along the first direction.

Exemplarily, when the floating connection assembly 800 is not moving, the floating connection assembly 800 may be entirely located within the floating space 113, not protruding from the first panel 111; or, the floating connection assembly 800 may be partially located within the floating space 113, and partially protrude from the first panel 111 through the floating opening 114.

It should be explained that, if the floating connection assembly 800 cannot pass through the floating opening 114, then the dimension of the floating space 113 along the first direction needs to be not less than the sum of the dimension of the floating connection assembly 800 itself along the first direction and its maximum moving distance, which will cause some restriction on the thickness design of the end panel body 110 and the dimension design of the floating connection assembly 800.

However, if the floating connection assembly 800 is able to pass through the floating opening 114 and protrude from the first panel 111, it only needs to be ensured that the dimension of the floating space 113 along the first direction is greater than the maximum moving distance of the floating connection assembly 800. This helps to make the structural design of the end panel body 110 and the floating connection assembly 800 more flexible.

Combined with FIG. 3 for further explanation, the electrical structure 700 is connected to the first panel 111. When the electrical structure 700 is connected to the floating connection assembly 800, if the floating connection assembly 800 moves unrestricted toward the second panel 112, it is possible to increase the distance between the floating connection assembly 800 and the electrical structure 700, and it may be possible that after the electrical structure 700 is attached to the first panel 111, the electrical structure 700 still cannot achieve reliable connection with the floating connection assembly 800. Moreover, if the floating space 113 passes through the second panel 112, the floating connection assembly 800 may even escape from the floating space 113 or collide with the cell 510 inside the battery module, causing adverse effects on the cell 510.

Therefore, to avoid the above situation, in some embodiments, as shown in FIG. 6, the inner wall of the floating space 113 and/or the floating connection assembly 800 is provided with a position-limiting structure, and the position-limiting structure is configured to limit the floating connection assembly 800 from passing through the second panel 112.

Exemplarily, the position-limiting structure may be a protrusion disposed on the inner wall of the floating space 113 and protruding toward the floating connection assembly 800; or, a protrusion disposed on the floating connection assembly 800 and protruding toward the inner wall of the floating space 113; or, the position-limiting structure may include a groove disposed on the floating connection assembly 800, and a protrusion disposed on the inner wall of the floating space 113 and extending into the groove.

The battery module of this embodiment, by setting a position-limiting structure, limits the floating connection assembly 800 from passing through the second panel 112, thus avoiding adverse effects on other devices of the battery module during the movement of the floating connection assembly 800 along the first direction.

As shown in FIG. 4, in some embodiments, the floating connection assembly 800 includes a floating base 810 located in the floating space 113. The shape of the cross section in the radial direction of the floating base 810 matches a shape of the cross section in the radial direction of the floating space 113. As shown in FIG. 6, the inner wall of the floating space 113 along the second direction (such as the Y1 direction in FIG. 6) is provided with a position-limiting groove 115, and the groove wall of the position-limiting groove 115 close to the second panel 112 is defined as the first groove wall 1151. The floating base 810 is connected with an elastic claw 820 that can stretch and shrink along the second direction. The floating connection assembly 800 has a stopping state that prevents movement toward the second panel 112. When the floating connection assembly 800 is in the stopping state, the elastic claw 820 abuts against the first groove wall 1151.

Exemplarily, the material of the floating base 810 may be an insulating material, such as plastic.

Exemplarily, the materials of the floating base 810 and the elastic claw 820 may both be elastic materials.

Exemplarily, one, two, or multiple position-limiting groove 115 may be provided around the axis (parallel to the first direction) of the floating space 113.

In this embodiment, the floating space 113 may limit the radius movement of the floating connection assembly 800, ensuring that the floating connection assembly 800 can only move along the first direction, thus preventing the part where the electrical structure 700 connects with the end panel body 110 through the floating connection assembly 800 from sliding on the first panel 111. To some extent, this ensures the connection reliability between the electrical structure 700 and the end panel body 110.

Since the shape of the cross section in the radial direction of the floating space 113 matches the shape of the cross section in the radial direction of the floating base 810, the gap between the inner wall of the floating space 113 and the floating base 810 is small. In order to set a position-limiting structure between the two, an elastic claw 820 that can stretch and shrink along the second direction is connected to the floating base 810. During the process of inserting the floating base 810 into the floating space 113 along the first direction, the elastic claw 820 may shrink to avoid obstructing the movement of the floating base 810. When the floating base 810 is inserted to the preset position, the elastic claw 820 may stretch so that at least part of the elastic claw 820 extends into the position-limiting groove 115. During the movement of the floating connection assembly 800 toward the second panel 112, the elastic claw 820 in the position-limiting groove 115 continuously approaches the first groove wall 1151. When the floating connection assembly 800 moves to the preset position, the elastic claw 820 abuts against the first groove wall 1151 to prevent the floating connection assembly 800 from continuing to move, thus realizing the position-limiting function. At this time, the floating connection assembly 800 is in the stopping state.

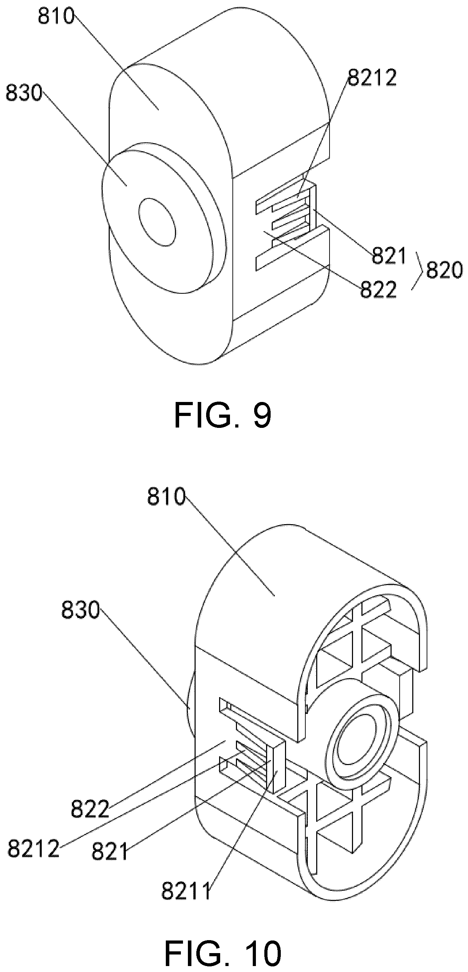

As shown in FIG. 9, FIG. 9 displays a front perspective view of a floating connection assembly 800 of a first structure. In some embodiments, the elastic claw 820 includes a claw body 822, and a position-limiting portion 821 formed on the claw body 822 and protruding outward. When the elastic claw 820 stretches, the position-limiting portion 821 is located in the position-limiting groove 115. As shown in FIG. 10, FIG. 10 displays a rear perspective view of a floating connection assembly 800 of a first structure. One end of the position-limiting portion 821 near the second panel 112 is provided with a first abutting surface 8211 that may abut against the first groove wall 1151.

Exemplarily, the position-limiting portion 821 and the claw body 822 may be fixedly connected or formed as an integrated structure.

Exemplarily, along the first direction, the dimension of the position-limiting groove 115 is greater than the dimension of the position-limiting portion 821, so as to ensure that the position-limiting portion 821 can move along the first direction within the position-limiting groove 115, thereby ensuring that the floating connection assembly 800 can move along the first direction.

In this embodiment, the claw body 822 may be located in the floating space 113, while the protruding position-limiting portion 821 extends into the position-limiting groove 115. When the floating connection assembly 800 is in the stopping state, the first abutting surface 8211 abuts against the first groove wall 1151 to realize the position-limiting function for the floating connection assembly 800.

The elastic claw 820 realizes the position-limiting function by extending the protruding position-limiting portion 821 into the position-limiting groove 115. Compared with the structure that realizes the position-limiting function through the free end of the claw body 822 abutting against the first groove wall 1151, this may reduce the restriction on the setting direction of the claw body 822, making the design of the elastic claw 820 more flexible.

Specifically, as shown in FIG. 6, in the structure of the floating connection assembly 800 displayed in FIG. 6, the free end of the claw body 822 faces the second panel 112. Under the circumstances, the first abutting surface 8211 and the free end of the claw body 822 are on the same side, and they may be aligned with each other.

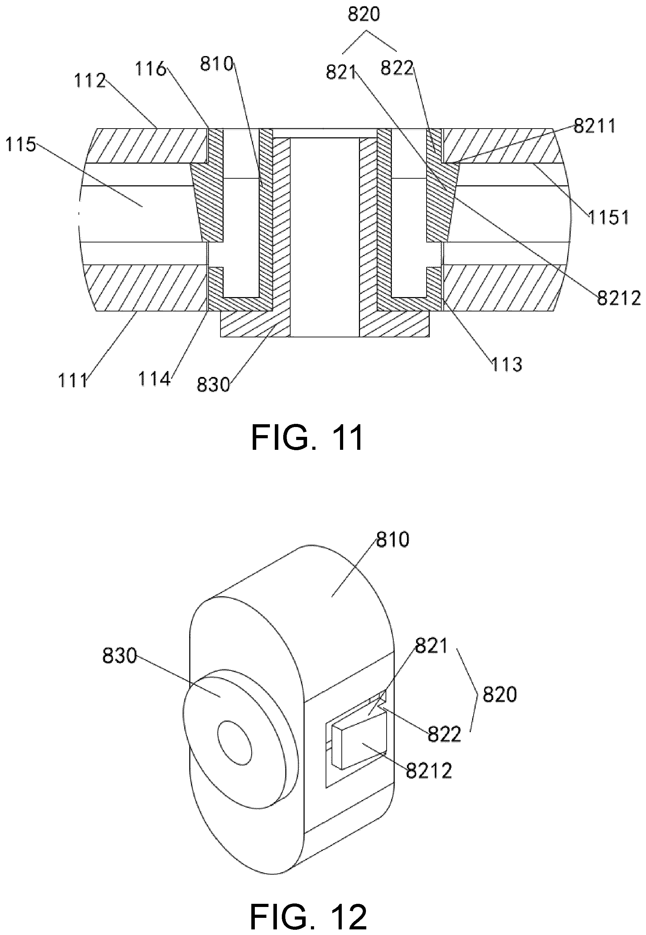

As shown in FIG. 11, FIG. 11 displays a partial sectional view of the floating connection assembly 800 of the second structure at the A-A section. In the floating connection assembly 800 shown in FIG. 11, the free end of the claw body 822 faces the first panel 111. Under the circumstances, the first abutting surface 8211 and the free end of the claw body 822 face opposite directions.

As shown in FIG. 8, FIG. 8 displays a schematic view of the second panel 112 of the end panel body 110. In some embodiments, the second panel 112 is provided with a mounting opening 116 communicating with the floating space 113, and the floating connection assembly 800 is inserted into the floating space 113 through the mounting opening 116. As shown in FIG. 6, the position-limiting portion 821 is provided with an inclined surface 8212 at least at one end away from the first abutting surface 8211.

Exemplarily, the shape of the mounting opening 116 matches the shape of the cross section in the radial direction of the floating base 810.

The floating connection assembly 800 is inserted into the floating space 113 along the first direction through the mounting opening 116 disposed on the second panel 112. During this process, the elastic claw 820 needs to shrink. Therefore, an inclined surface 8212 is disposed on one side of the position-limiting portion 821 away from the first abutting surface 8211. When the position-limiting portion 821 passes through the mounting opening 116, the inclined surface 8212 first abuts against the edge of the mounting opening 116, and the edge of the mounting opening 116 applies a force along the second direction to the elastic claw 820 through the inclined surface 8212, so that the elastic claw 820 shrinks, ensuring that the floating connection assembly 800 can be smoothly inserted into the floating space 113.

In the meantime, when the floating connection assembly 800 passes through the floating opening 114, the edge of the floating opening 114 will also cause the elastic claw 820 to shrink through the inclined surface 8212, so that the floating connection assembly 800 can continue to move toward the direction of the first panel 111, which helps to increase the moving distance of the floating connection assembly 800, thus further ensuring that the electrical structure 700 will not be damaged by bending with the end panel body 110.

It also needs to be explained that when the floating connection assembly 800 moves toward the first panel 111, although the inclined surface 8212 cannot abut against the groove wall of the position-limiting groove 115, the floating connection assembly 800 can only escape from the floating space 113 after the elastic claw 820 is completely deformed by shrinking, and the force required to drive the elastic claw 820 to completely deform is much greater than the pushing force on the electrical structure 700 when the end panel body 110 deforms. Therefore, setting the elastic claw 820 can also serve a position-limiting function in the process of the floating connection assembly 800 moving toward the first panel 111.

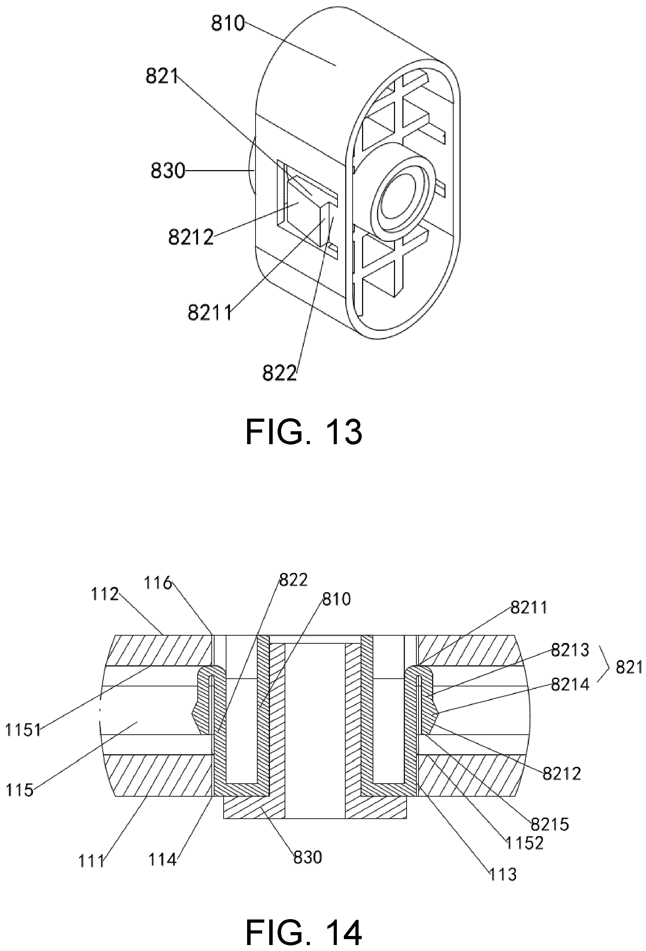

As shown in FIG. 12, FIG. 12 displays a front perspective view of a floating connection assembly 800 of a second structure. In the floating connection assembly 800 shown in FIG. 12, the inclined surface 8212 is on the same side as the free end of the claw body 822, and the inclined surface 8212 extends along the first direction to the free end of the claw body 822. As shown in FIG. 13, FIG. 13 displays a rear perspective view of a floating connection assembly 800 of a second structure. The first abutting surface 8211 of the position-limiting portion 821 away from the inclined surface 8212 faces a part where the claw body 822 connects with the floating base 810.

As shown in FIG. 14, FIG. 14 displays a partial sectional view of the floating connection assembly 800 of the third structure at the A-A section. In some embodiments, the position-limiting portion 821 includes a first sub-portion 8213 and a second sub-portion 8214. One end of the first sub-portion 8213 close to the second panel 112 is connected to the free end of the claw body 822, and one end of the first sub-portion 8213 close to the first panel 111 is suspended. The second sub-portion 8214 is formed on one side of the first sub-portion 8213 away from the claw body 822 and close to the first panel 111. The first abutting surface 8211 is disposed on the first sub-portion 8213, and the inclined surface 8212 is disposed on the second sub-portion 8214.

In this embodiment, the second sub-portion 8214 forms an elastic structure similar to the claw body 822. When the floating connection assembly 800 moves toward the second panel 112 to a preset position, the first abutting surface 8211 located at the connection between the first sub-portion 8213 and the free end of the claw body 822 abuts against the first groove wall 1151, so that the floating connection assembly 800 is in a stopping status.

In some embodiments, the side wall of the position-limiting groove 115 close to the first panel 111 is a second groove wall 1152, and one end of the first sub-portion 8213 facing the second panel 112 is also provided with a second abutting surface 8215. The second abutting surface 8215 may abut against the second groove wall 1152.

When the floating connection assembly 800 moves toward the first panel 111, the second abutting surface 8215 will also gradually approach the second groove wall 1152. When the second abutting surface 8215 abuts against the second groove wall 1152, a force will be generated to hinder the floating connection assembly 800 from continuing to move toward the first panel 111. If the force driving the floating connection assembly 800 to move (i.e., the pushing force on the electrical structure 700 when the end panel body 110 deforms) is greater than this force, the first sub-portion 8213 and/or the claw body 822 will bend and deform. The floating connection assembly 800 can only escape from the floating space 113 after the claw body 822 and the first sub-portion 8213 are completely deformed by shrinking, and the force required to drive the claw body 822 and the first sub-portion 8213 to completely deform is much greater than the pushing force on the electrical structure 700 when the end panel body 110 deforms. Therefore, setting the claw body 822 and the first sub-portion 8213 may serve a position-limiting function in the process of the floating connection assembly 800 moving toward the first panel 111.

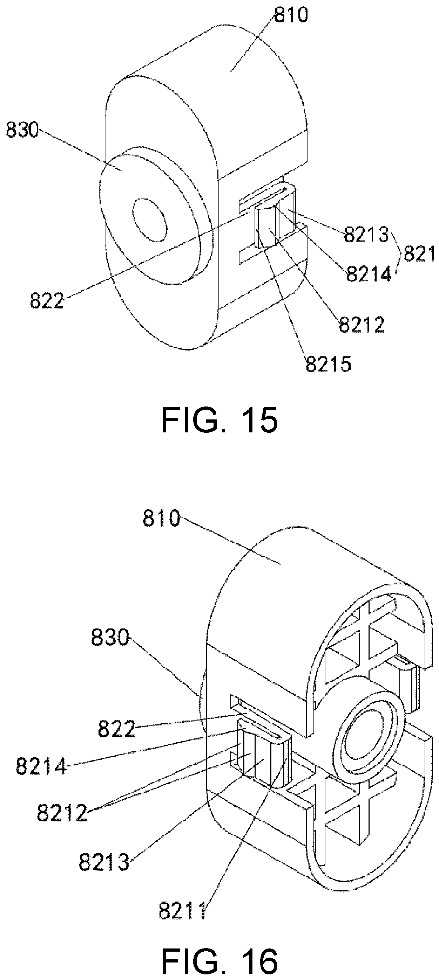

As shown in FIG. 15, FIG. 15 is a front perspective view of a floating connection assembly 800 of a third structure. The inclined surface 8212 disposed on the second sub-portion 8214 is on the same side as the free end of the first sub-portion 8213, and the inclined surface 8212 may extend to a position aligned with the free end of the first sub-portion 8213.

As shown in FIG. 16, FIG. 16 is a rear perspective view of a floating connection assembly 800 of a third structure. One side of the second sub-portion 8214 facing the first abutting surface 8211 may also be set with an inclined surface 8212.

As shown in FIG. 6, in some embodiments, a fastener 830 is fixedly connected to one side of the floating base 810 away from the cell 510, and the electrical structure 700 is connected to the floating base 810 through the fastener 830.

Exemplarily, the fastener 830 may be a nut or a bolt, etc.

Exemplarily, the fastener 830 may be fixedly connected to the floating base 810 through adhesion, snap-fit or thermal bonding, etc.

Exemplarily, the shape of the cross section in the radial direction of the floating seat 810 is non-circular, ensuring that when the electrical structure 700 is mounted through the fastener 830, the fastener 830 and the floating base 810 will not rotate within the floating space 113.

Taking the fastener 830 as a nut as an example for explanation. When mounting the electrical structure 700, a bolt passes through the electrical structure 700 and is threadedly connected with the threaded hole of the nut. When the bolt is fastened, the connection between the electrical structure 700 and the floating base 810 may be realized.

As shown in FIG. 5, in some embodiments, the end panel assembly 100 further includes a first connector 130, and the electrical structure 700 is fixedly connected to the first area 111a through the first connector 130.

Exemplarily, the first connector 130 and the fastener 830 have the same or similar structure.

The electrical structure 700 is fixedly connected to the first area 111a of the end panel body 110 through the first connector 130, which may keep the relative position between the electrical structure 700 and the first area 111a unchanged, so as to further improve the connection reliability between the electrical structure 700 and the end panel body 110, and avoid the electrical structure 700 from falling off from the end panel body 110.

As shown in FIG. 4, in some embodiments, the median line (as shown by the dash-dot line in FIG. 4) of the first connector 130 along the height direction of the cell coincides with the median line (as shown by the dash-dot line in FIG. 4) of the floating connection assembly 800 along the height direction of the cell.

When the first connector 130 moves with the first area 111a in a direction away from the cell 510, since the first connector 130 and the floating connection assembly 800 are linearly distributed along the height direction of the cell, the force applied by the first connector 130 to the electrical structure 700 and the force applied by the electrical structure 700 to the floating connection assembly 800 are also on the same straight line, which enables the floating connection assembly 800 to move more smoothly in the direction away from the cell 510 under the pull of the electrical structure 700, thus further reducing the risk of bending deformation of the electrical structure 700.

Based on the same inventive concept, in combination with the description of the battery module in the above embodiments, this embodiment provides a battery pack, which has the corresponding technical effects of the battery module in the above embodiments, which will not be repeated here.

As shown in FIG. 5, this embodiment provides a battery pack, including a lower housing 900 and a battery module as described in the above embodiments. The bottom wall 117 of the end panel body 110 is fixedly connected to the lower housing 900, and along the height direction of the end panel body 110 (such as the Z1 direction in FIG. 5), the second area 111b is located between the first area 111a and the bottom wall 117.

Exemplarily, the lower housing 900 may be fixedly connected to the bottom wall 117 of the end panel body 110 through welding, adhesive connection, snap connection, or fastener connection.

According to the structure and direction shown in FIG. 5, further explanation is provided. The lower housing 900 is located below the cell 510. When the cell 510 is in an expanded status, the lower housing 900 will constrain the end panel body 110 through the bottom wall 117 of the end panel body 110, which makes a part of the end panel body 110 close to the lower housing 900 not easily deformed, while a part relatively far from the lower housing 900 is more likely to deform (i.e., move in a direction away from the cell 510), that is, the second area 111b is closer to the bottom wall 117 compared to the first area 111a.

In some embodiments, the bottom wall 117 is adhesively fixed to the lower housing 900.

In order to simplify the connection process between the lower housing 900 and the end panel body 110, in this embodiment, an adhesive process is selected to achieve the fixed connection between the lower housing 900 and the bottom wall 117 of the end panel body 110.

It should be noted that some embodiments of the present disclosure have been described above. Other embodiments are within the scope of the appended claims. In some cases, the actions or steps recited in the claims may be performed in a different order than that in the above embodiments and still achieve the desired results. In addition, the processes depicted in the accompanying drawings do not necessarily require the specific order or sequential order shown to achieve the desired results. In some embodiments, multitasking and parallel processing may also be possible or may be advantageous.

Each embodiment in the present disclosure is described in a progressive manner, with each embodiment focusing on the differences from other embodiments, and the same or similar parts between various embodiments may be cross-referenced.

The description of the present disclosure is given for the purpose of example and description, and is not exhaustive or limiting the application to the disclosed forms. Many modifications and variations are apparent to those of ordinary skill in the art. The selection and description of embodiments are to better explain the principles and practical applications of the present disclosure, and to enable those of ordinary skill in the art to understand the present disclosure so as to design various embodiments with various modifications suitable for specific uses.

Those of ordinary skill in the art should understand: the discussion of any embodiment above is merely exemplary, and is not intended to imply that the scope of the present disclosure (including the claims) is limited to these examples; under the concept of the present disclosure, technical features between the above embodiments or different embodiments may also be combined, steps may be implemented in any sequence, and there are many other variations of different aspects of the embodiments of the present disclosure as described above, which are not provided in detail for the sake of brevity.

Although the present disclosure has been described in conjunction with specific embodiments of the present disclosure, many substitutions, modifications, and variations will be apparent to those of ordinary skill in the art based on the foregoing description.

## Claims

1. A battery module, **characterized in that** the battery module comprising:
an end panel assembly (100), comprising an end panel body (110) and a floating connection assembly (800), wherein the end panel body (110) comprises a first panel (111) and a second panel (112) opposite to each other, the floating connection assembly (800) is slidably connected to the end panel body (110);
an electrical structure (700), wherein a part of the electrical structure (700) is connected to a first area (111a) of the first panel (111), and the other part of the electrical structure (700) is connected to a second area (111b) of the first panel (111) through the floating connection assembly (800);
a cell (510), disposed on one side close to the second panel (112), wherein the cell (510) has an expanded status, when the cell (510) is in the expanded status, a first area (111a) of the end panel body (110) moves in a direction away from the cell (510) relative to the second area (111b), the floating connection assembly (800) moves in a direction away from the cell (510) relative to the end panel body (110), and the electrical structure (700) as a whole moves with the first area (111a) of the end panel body (110).

2. The battery module according to claim 1, wherein the end panel body (110) is provided with a floating space (113) along a first direction; the first direction is parallel to a thickness direction of the end panel body (110); the floating connection assembly (800) is at least partially disposed in the floating space (113), and the floating connection assembly (800) is able to move along the first direction.

3. The battery module according to claim 1 or 2, wherein the first panel (111) is provided with a floating opening (114), the floating opening (114) communicates with the floating space (113), the floating connection assembly (800) is able to pass through the floating opening (114) along the first direction.

4. The battery module according to any one of claims 1 to 3, further comprising a position-limiting structure disposed at least one of an inner wall of the floating space (113) and the floating connection assembly (800) for limiting the floating connection assembly (800) from passing through the second panel (112).

5. The battery module according to any one of claims 1 to 4, wherein the floating connection assembly (800) comprises a floating base (810) located in the floating space (113), and a shape of the cross section in the radial direction of the floating base (810) matches a shape of the cross section in the radial direction of the floating space (113)
an inner wall of the floating space (113) along a second direction is provided with a position-limiting groove (115), and a groove wall of the position-limiting groove (115) close to the second panel (112) is defined as a first groove wall (1151); the floating base (810) is connected with an elastic claw (820) that is able to stretch and shrink along the second direction;
the floating connection assembly (800) has a stopping state that prevents movement toward the second panel (112), when the floating connection assembly (800) is in the stopping state, the elastic claw (820) abuts against the first groove wall (1151).

6. The battery module according to any one of claims 1 to 5, wherein the elastic claw (820) comprises a claw body (822), and a position-limiting portion (821) formed on the claw body (822) and protruding outward, the position-limiting portion (821) is located in the position-limiting groove (115) when the elastic claw (820) stretches; one end of the position-limiting portion (821) close to the second panel (112) is provided with a first abutting surface (8211) that is able to abut against the first groove wall (1151).

7. The battery module according to any one of claims 1 to 6, wherein a free end of the claw body (822) faces the first panel (111) or faces the second panel (112).

8. The battery module according to any one of claims 1 to 7, wherein the second panel (112) is provided with a mounting opening (116) communicating with the floating space (113), and the floating connection assembly (800) is inserted into the floating space (113) through the mounting opening (116); the position-limiting portion (821) is provided with an inclined surface (8212) at least at one end away from the first abutting surface (8211).

9. The battery module according to any one of claims 1 to 8, wherein the floating base (810) is fixedly connected with a fastener (830) on one side away from the cell (510), and the electrical structure (700) is connected to the floating base (810) through the fastener (830).

10. The battery module according to any one of claims 1 to 9, wherein the end panel assembly (100) further comprises a first connector (130), the electrical structure (700) is fixedly connected to the first area (111a) through the first connector (130).

11. The battery module according to any one of claims 1 to 10, wherein a median line of the first connector (130) along a height direction of the cell (510) coincides with a median line of the floating connection assembly (800) along the height direction of the cell (510).

12. A battery pack, **characterized in that** the battery pack comprising the battery module according to any one of claims 1 to 11 and a lower housing (900), wherein a bottom wall (117) of the end panel body (110) is fixedly connected to the lower housing (900), along a height direction of the end panel body (110), the second area (111b) is located between the first area (111a) and the bottom wall (117).

13. The battery pack according to claim 12, wherein the bottom wall (117) is adhesively fixed to the lower housing (900).
